# EUROPEAN PATENT SPECIFICATION

(11) **EP 0 798 203 B1**
(45) Date of publication and mention of the grant of the patent: **26.05.1999**
(21) Application number: 96104569.7
(22) Date of filing: 22.03.1996
(51) Int. Cl.: B62M 23/02

(54) **Electrical drive for a bicycle**
Fahrrad mit elektrischem Hilfsmotor
Bicyclette assistée par un moteur électrique

(43) Date of publication of application: 01.10.1997
(73) Proprietor: MERIDA INDUSTRY CO., LTD., Meikang Village, Tatsun Hsiang, Changhua Hsien (TW)
(72) Inventor: Tseng, Diing-huang, Tatsun Hsiang, Changhua Hsien (TW)
(74) Representative: LOUIS, PÖHLAU, LOHRENTZ & SEGETH

(56) References cited:
- EP-A- 0 636 538
- EP-A- 0 675 037
- EP-A- 0 683 093
- CH-A- 593 822
- FR-A- 2 302 231

## Description

The present invention relates to an electrical drive.

A conventional electrical drive cannot control powers and voltages required for moving a bicycle, thereby easily incurring a consumption in electricity.

An electrical drive according to the preamble of claim 1 is known from EP-A-0 683 093.

In accordance with one aspect of the present invention, there is provided an electrical drive which comprises a housing fixedly mounted between a down tube and a pair of chain stays. A crank axle is rotatably mounted in the housing. A drive shaft is rotatably mounted around the crank axle. A chain wheel is fixedly mounted around a first end portion of the drive shaft. A first single direction bearing is fitted around the first end portion of the drive shaft.

A beveled gear is mounted around the first single direction bearing. A gear train is mounted in the housing and meshes with the beveled gear. A motor is fixedly mounted on the housing for operating the gear train. A battery box is fixedly mounted on the down tube for supplying power to the motor.

A second single direction bearing is fitted around a second end portion of the drive shaft. A torsional ring has a first end portion mounted on the second single direction bearing. A torsional rod is securely mounted around one end portion of the crank axle to rotate therewith and is fixedly mounted in a second end portion of the torsional ring.

In the drawings:
Fig. 1 is a front view of a bicycle in accordance with the present invention;
Fig. 2 is front plan view of an electric drive in accordance with the present invention;
Fig. 3 is a top plan cross-sectional view of Fig. 2;
Fig. 4 is a right-side view of Fig. 2; and
Fig. 5 is an flow chart of the electric drive.

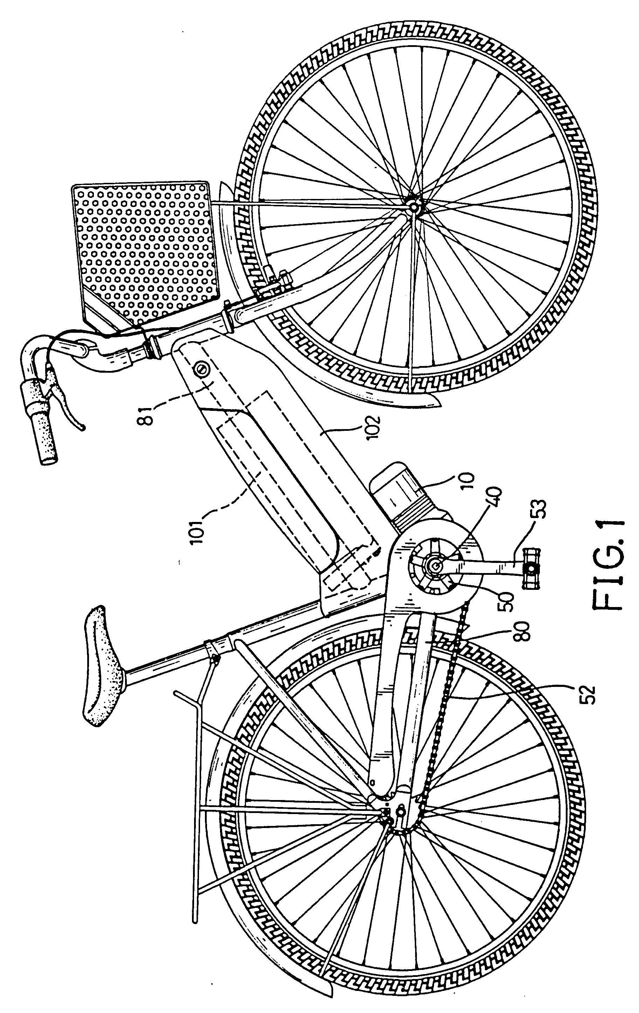

Referring to the drawings, and initially to Figs. 1-3, an electrical drive in accordance with the present invention is provided for a bicycle which comprises a down tube 81, a pair of chain stays 80, a crank axle 40 rotatably disposed between the down tube 81 and the pair of chain stays 80, two crank arms 53 each fixedly mounted around first and second end portions 402 and 404 of the crank axle 40 respectively, a chain wheel 50 rotatably disposed on the first end portion 402 of the crank axle 40, and a drive chain 52 meshing with the chain wheel 50 to move therewith.

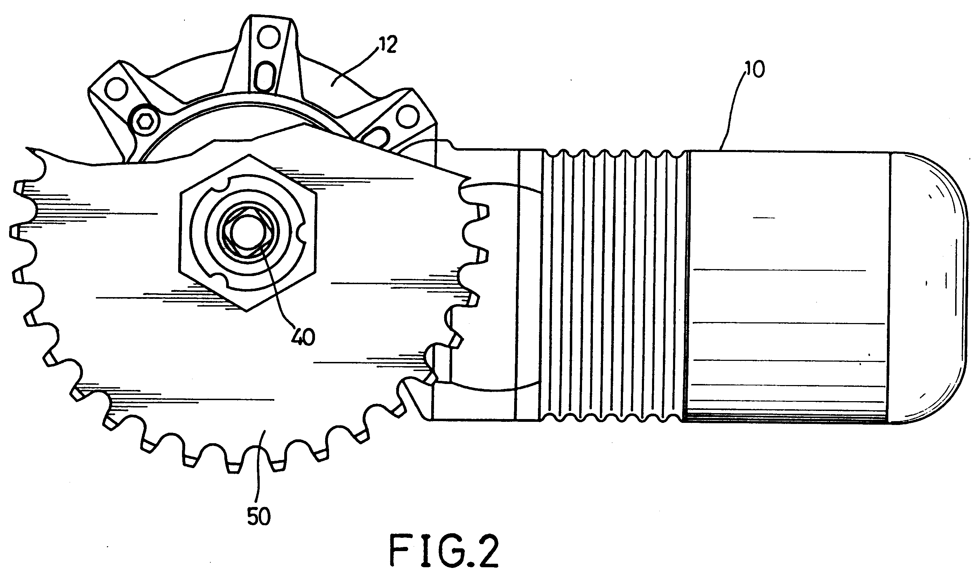

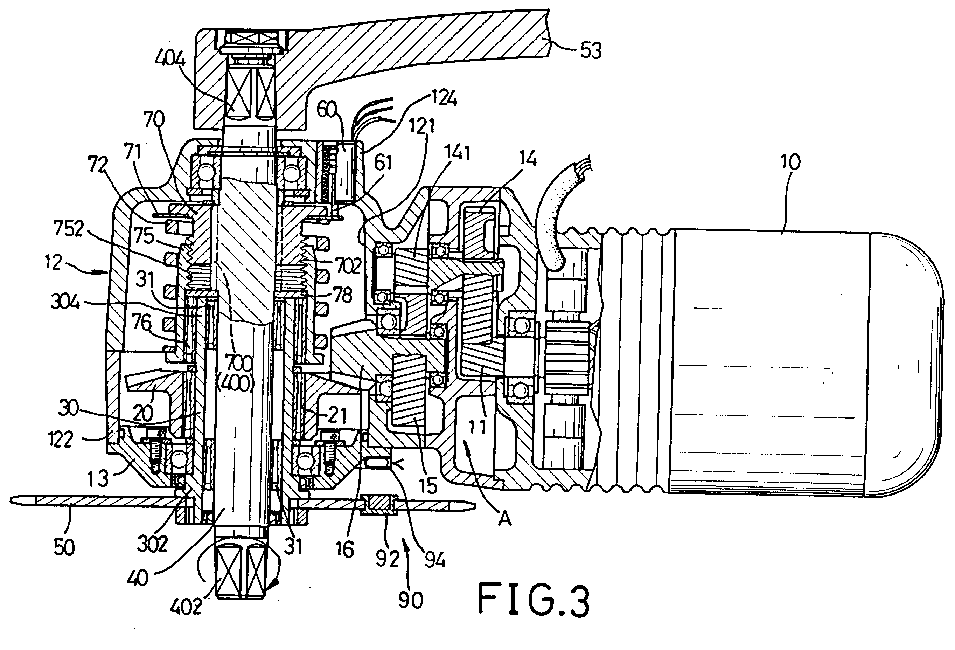

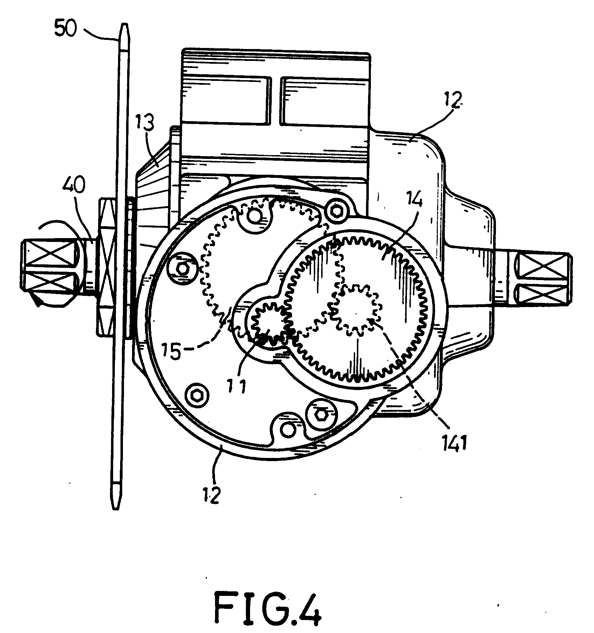

Referring to Figs. 3 and 4 with reference to Figs. 1 and 2, the electrical drive comprises a housing 12 fixedly mounted between the down tube 81 and the chain stays 80 and having a chamber 121 defined in an inner wall thereof. The crank axle 40 is rotatably mounted in the chamber 121 with the first end portion 402 thereof extending outwards of a first open end portion 122 of the housing 12 and the second end portion 404 thereof extending outwards of a second end portion 124 of the housing 12.

A drive shaft 30 is rotatably mounted around the crank axle 40 and has a first end portion 302 located adjacent to the first end portion 402 of the crank axle 40. Two needle bearings 31 are fitted between the crank axle 40 and the drive shaft 30 respectively. The chain wheel 50 is fixedly mounted around the first end portion 302 of the drive shaft 30.

A first single direction bearing 21 is fitted around the first end portion 302 of the drive shaft 30. A beveled gear 20 is mounted around the first single direction bearing 21. A gear train (A) is mounted in the housing 12 and meshes with the beveled gear 20. A motor 10 is fixedly mounted on the housing 12 for operating the gear train (A).

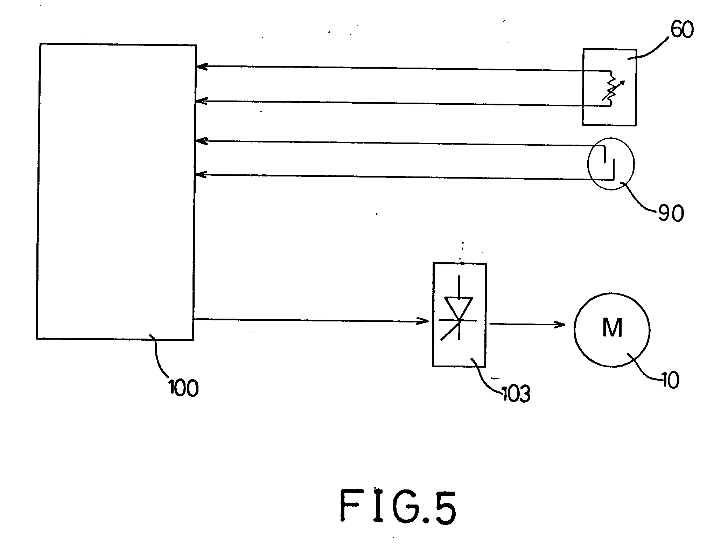

A battery box 101 is fixedly mounted on the down tube 81 for supplying power to the motor 10. A casing 102 is mounted around the down tube 81 for containing therein a central processing unit 100 and an actuator 103 as shown in Fig. 5.

Preferably, the gear train (A) includes a first gear 11 which can be operated to rotate by means of the motor 10 and meshes with a second gear 14 so as to rotate the second gear 14 which can in turn rotate a third gear 141 which meshes with a fourth gear 15 so as to rotate the fourth gear 15 which can in turn rotate a beveled gear 16 which meshes with the beveled gear 20 so as to rotate the beveled gear 20.

Furthermore, a second single direction bearing 76 is fitted around a second end portion 304 of the drive shaft 30. A torsional ring 75 includes a first end portion mounted on the second single direction bearing 76 and a second end portion located adjacent to the second end portion 404 of the crank axle 40. A torsional rod 70 is securely mounted around the second end portion 404 of the crank axle 40 to rotate therewith and is fixedly mounted in the second end portion of the torsional ring 75. A spring 72 is mounted between the torsional rod 70 and the torsional ring 75.

Preferably, the torsional rod 70 includes splines 700 defined therein for engaging with ribs 400 formed on the crank axle 40.

Preferably, the torsional rod 70 has an outer thread 702 engaged in an inner thread 752 formed on the torsional ring 75. A baffle 78 is fixedly mounted in the torsional ring 75 and is located between the torsional rod 70 and the second single direction bearing 76.

A torsion sensor means 60 is mounted on the second end portion 124 of the housing 12 for sensing a torsion exerted by the crank axle 40 and includes a spindle 61 engaged with a sheet 71 fixedly mounted on the torsional rod 70.

A cap 13 is fixedly mounted on the first open end portion 122 of the housing 12. A velocity sensor means 90 is mounted between the chain wheel 50 and the cap 13 for sensing a rotational velocity of the chain wheel 50 and includes a magnet 92 mounted on the chain wheel 50 and a measuring unit 94 mounted on the cap 13.

In operation, referring to Figs. 3-5 with reference to Figs. 1 and 2, the crank axle 40 can be operated to rotate by means of a user exerting a force on the crank arms 53 so as to rotate the torsional rod 70 which in turn rotates the torsional ring 75 which can rotate the drive shaft 30 along one direction only via the single direction bearing 76, thereby rotating the chain wheel 50 and moving the bicycle.

In the meanwhile, the gear train (A) can be operated by the motor 10 to rotate the beveled gear 20 which can rotate the drive shaft 30 along the same direction only via the single direction bearing 21, thereby rotating the chain wheel 50 and providing an assistance for moving the bicycle.

By such an arrangement, the bicycle can be operated to displace by means of exertion of the user and by means of electrical power synchronously.

Furthermore, especially referring to Figs. 3 and 5, the torsion sensing means 60 can input signals indicating torsions exerted on the crank axle 40 and the velocity sensing means 90 can input signals indicating rotational velocities of the chain wheel 50 into the central processing unit 100 which can perform an analytic operation so as to determine power and voltages required for the motor 10 to operate the gear train (A) by means of such as pulse width modulation (P.W.M.), thereby transmitting signals into the actuator 103 for controlling the motor 10.

By such an arrangement, the power supplied by the motor 10 to operate the gear train (A) can be controlled, thereby optimizing the efficiency of the supplied electricity.

## Claims

1. An electrical drive for a bicycle which comprises a down tube (81), a pair of chain stays (80), a crank axle (40) rotatably disposed between said down tube (81) and said pair of chain stays (80), and a chain wheel (50) rotatably disposed on a first end portion (402) of said crank axle (40), said electrical drive comprising:
a housing (12) fixedly mounted between said down tube (81) and said pair of chain stays (80) and having a chamber (121) defined in an inner wall thereof, said crank axle (40) being rotatably mounted in said chamber (121) with the first end portion (402) thereof extending outwards of a first open end portion (122) of said housing (12) and a second end portion (404) thereof extending outwards of a second end portion (124) of said housing (12);
a drive shaft (30) rotatably mounted around said crank axle (40) and having a first end portion (302) located adjacent to the first end portion (402) of said crank axle (40), said chain wheel (50) being fixedly mounted around the first end portion (302) of said drive shaft (30);
a beveled gear (20) mounted around a first single direction bearing (21);
a gear train (A) mounted in said housing (12) and meshing and co-operating with said beveled gear (20);
a motor (10) fixedly mounted on said housing (12) for operating said gear train (A); and
a battery box (101) fixedly mounted on said down tube (81) for supplying power to said motor (10);
a second single direction bearing (76) fitted around a second end portion (304) of said drive shaft (30);
characterised by the first single direction bearing (21) being fitted around the first end portion (302) of said drive shaft (30);, the electrical drive further comprising:
a torsional ring (75) having a first end portion mounted on said second single direction bearing (76); and
a torsional rod (70) securely mounted around the second end portion (404) of said crank axle (40) to rotate therewith and fixedly mounted in a second end portion of said torsional ring (75).

2. The electrical drive in accordance with claim 1, further comprising a cap (13) fixedly mounted on the first open end portion (122) of said housing (12), and a velocity sensor means (90) mounted between said chain wheel (50) and said cap (13) for sensing a rotational velocity of said chain wheel (50).

3. The electrical drive in accordance with claim 1, further comprising a torsion sensor means (60) mounted on the second end portion (124) of said housing (12) for sensing a torsion exerted by said crank axle (40).

## Patentansprüche

1. Elektrischer Antrieb für ein Fahrrad, das ein nach unten gerichtetes Rohr (81), ein Paar Kettenstege (80), eine Kurbelachse (40), die zwischen dem nach unten gerichteten Rohr (81) und dem Paar Kettenstege (80) drehbar angeordnet ist, und ein Kettenrad (50), das an einem ersten Abschnitt (420) der Kurbelachse (40) drehbar angebracht ist, enthält, wobei der elektrische Antrieb enthält:
ein Gehäuse (12), das zwischen dem nach unten gerichteten Rohr (81) und dem Paar Kettenstege (80) befestigt ist und eine in seiner Innenwand definierte Kammer (121) aufweist, wobei die Kurbelachse (40) in der Kammer (121) drehbar angebracht ist, wobei der erste Endabschnitt (402) sich hiervon aus einem ersten offenen Endabschnitt (122) des Gehäuses (12) erstreckt und ein zweiter Endabschnitt (404) sich hiervon aus einem zweiten Endabschnitt (124) des Gehäuses (12) erstreckt;
eine Antriebswelle (30), die um die Kurbelachse (40) drehbar angebracht ist und einen ersten Endabschnitt (302) besitzt, der sich in der Nähe des ersten Endabschnitts (402) der Kurbelachse (40) befindet, wobei das Kettenrad (50) am ersten Endabschnitt (302) der Antriebswelle (30) drehfest angebracht ist;
ein Kegelrad (20), das um ein erstes Unidirektionallager (21) angeordnet ist;
einen Getriebezug (A), der im Gehäuse (12) angebracht und mit dem Kegelrad (20) in Eingriff ist und mit diesem zusammenwirkt;
einen Motor (10), der am Gehäuse (12) fest angebracht ist, um den Getriebezug (A) zu betreiben, und
einen Batteriekasten (101), der an dem nach unten gerichteten Rohr (81) fest angebracht ist, um den Motor (10) mit Leistung zu versorgen;
ein Zweites Unidirektionallager (76), das um einen zweiten Endabschnitt (304) der Antriebswelle (30) angebracht ist;
dadurch gekennzeichnet, daß
das erste Unidirektionallager (21) um den ersten Endabschnitt (302) der Antriebswelle (300) angebracht ist; und der elektrische Antrieb ferner enthält:
einen Torsionsring (75) mit einem ersten Endabschnitt, der am zweiten Unidirektionallager (76) angebracht ist; und
einen Torsionsstab (70), der am zweiten Endabschitt (404) der Kurbelachse (40) drehfest angebracht ist, um sich mit dieser zu drehen, und in einem zweiten Endabschnitt des Torsionsrings (75) befestigt ist.

2. Elektrischer Antrieb nach Anspruch 1, ferner mit einer Kappe (13), die am ersten offenen Endabschnitt (122) des Gehäuses (12) fest angebracht ist, und einer Geschwindigkeitserfassungseinrichtung (90), die zwischen dem Kettenrad (50) und der Kappe (13) angebracht ist, um die Drehgeschwindigkeit des Kettenrades (50) zu erfassen.

3. Elektrischer Antrieb nach Anspruch 1, ferner mit einer Torsionserfassungseinrichtung (60), die am zweiten Endabschitt (124) des Gehäuses (12) angebracht ist, um eine auf die Kurbelachse (40) ausgeübte Torsion zu erfassen.

## Revendications

1. Un entraînement électrique pour une bicyclette, du type comprenant un tube de base (81), une paire d'appuis pour chaîne (80), un axe de manivelle (40) monté rotatif entre ledit tube de base (81) et ladite paire d'appuis pour chaîne (80) et une roue à chaîne (50) montée rotative sur une première portion terminale (402) dudit axe de manivelle, ledit entraînement électrique comprenant :
- un carter (12) monté fixe entre ledit tube de base (81) et ladite paire d'appuis de chaîne (80), et comportant une chambre (121) définie par une paroi interne de celui-ci, ledit axe de manivelle (40) étant monté rotatif dans ladite chambre (121), ladite première portion terminale (402) de celui-ci s'étendant à l'extérieur d'une première portion terminale ouverte (122) dudit carter (12), et une seconde portion terminale (404) de celui-ci s'étendant à l'extérieur d'une seconde portion terminale (124) dudit carter (12) ;
- un arbre d'entraînement (30) monté rotatif autour dudit axe de manivelle (40) et ayant une première portion terminale (302) située adjacente à la première portion terminale (402) dudit axe de manivelle (40), ladite roue à chaîne (50) étant montée fixe autour de la première portion terminale (302) dudit arbre d'entraînement (30) ;
- un engrenage conique (20) monté autour d'un premier palier unidirectionnel (21) ;
- un train d'engrenages (A) monté dans ledit carter (12), et engrenant et coopérant avec ledit engrenage conique (20) ;
- un moteur (10) monté fixe dans ledit carter (12) en vue de faire fonctionner ledit train d'engrenages (A) ; et
- un boîtier de batterie (101) monté fixe sur ledit tube de base (81) en vue de fournir l'énergie audit moteur (10) ;
- un second palier unidirectionnel (76) agencé autour d'une seconde portion terminale (304) dudit arbre d'entraînement (30),
**caractérisé par** le fait que le premier palier unidirectionnel (21) est agencé autour de la première portion terminale (302) dudit arbre d'entraînement (30), ledit entraînement électrique comportant au surplus :
- une bague de torsion (75) ayant une première portion terminale montée sur ledit second palier unidirectionnel (76) ; et
- une tige de torsion (70) solidement montée autour de la seconde portion terminale (404) dudit axe de manivelle (40), en vue de tourner avec celui-ci, et montée fixe dans une seconde portion terminale de ladite bague de torsion (75).

2. L'entraînement électrique selon la revendication 1, comprenant au surplus une calotte (13) montée fixe sur la première portion ouverte (122) dudit carter (12) et des moyens de détection de vitesse (90) montés entre ladite roue à chaîne (50) et ladite calotte (13), en vue de détecter la vitesse de rotation de ladite roue à chaîne (50).

3. L'entraînement électrique selon la revendication 1, comprenant au surplus des moyens de détection de torsion (60) montés sur la seconde portion terminale (124) dudit carter (12) en vue de détecter une torsion exercée par ledit axe de manivelle (40).
